(19)

Europäisches
Patentamt
European
Patent Office
Office européen
des brevets

(11) **EP 3 870 906 B1**

(12) **EUROPEAN PATENT SPECIFICATION**

(45) Date of publication and mention
of the grant of the patent:
**02.04.2025 Bulletin 2025/14**

(21) Application number: **19908130.8**

(22) Date of filing: **10.07.2019**

(51) International Patent Classification (IPC):
**F24F 11/46** *(2018.01)*  **F24F 11/64** *(2018.01)*
**F24F 11/65** *(2018.01)*  **G05B 13/02** *(2006.01)*
**F24F 110/10** *(2018.01)*  **F24F 110/12** *(2018.01)*
**F24F 140/50** *(2018.01)*  **F24F 140/60** *(2018.01)*

(52) Cooperative Patent Classification (CPC):
**F24F 11/46; F24F 11/64; F24F 11/65; G05B 13/027;**
F24F 2110/10; F24F 2110/12; F24F 2140/50;
F24F 2140/60

(86) International application number:
**PCT/KR2019/008476**

(87) International publication number:
**WO 2020/145463 (16.07.2020 Gazette 2020/29)**

(54) **ELECTRONIC DEVICE AND CONTROL METHOD THEREOF**

ELEKTRONISCHE VORRICHTUNG UND STEUERUNGSVERFAHREN DAFÜR

DISPOSITIF ÉLECTRONIQUE ET PROCÉDÉ DE COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2019 KR 20190002959**

(43) Date of publication of application:
**01.09.2021 Bulletin 2021/35**

(73) Proprietor: **Samsung Electronics Co., Ltd.**
**Suwon-si, Gyeonggi-do 16677 (KR)**

(72) Inventors:
• **PARK, Gunhyuk**
**Suwon-si Gyeonggi-do 16677 (KR)**

• **LEE, Jehyeon**
**Suwon-si Gyeonggi-do 16677 (KR)**
• **KIM, Kyungjae**
**Suwon-si Gyeonggi-do 16677 (KR)**
• **SONG, Kwanwoo**
**Suwon-si Gyeonggi-do 16677 (KR)**

(74) Representative: **Appleyard Lees IP LLP**
**15 Clare Road**
**Halifax HX1 2HY (GB)**

(56) References cited:
KR-A- 20120 023 983     KR-A- 20180 112 653
KR-A- 20180 138 463     KR-B1- 101 261 199
KR-B1- 101 875 489     US-A1- 2016 320 081
US-A1- 2018 195 752     US-A1- 2018 238 572

## Description

## Technical Field

The invention relates to an electronic device controlling an air conditioning system and a control method thereof. More particularly, the invention relates to an electronic device capable of reducing energy consumption of the air conditioning system, and a control method thereof.

## Background Art

In recent years, the importance of indoor air quality has increased and there has been a demand for methods to efficiently control an air conditioning system within a building. In general, in an air conditioning system, an initial setting value provided by the manufacturer is typically directly input without change and used. However, an initial setting value provided by the manufacturer is an evaluation value at the time of peak load, and is inappropriate in most times where a peak load does not occur.

Further, in a case that each of air conditioning devices included in an air conditioning system is manufactured by different manufacturers, it is difficult to control the respective air conditioning systems in a comprehensive manner.

The above information is presented as background information only to assist with an understanding of the invention. No determination has been made, and no assertion is made, as to whether any of the above might be applicable as prior art with regard to the invention. US 2018/238572 describes an example of the related art.

## Disclosure of Invention

## Technical Problem

Aspects of the invention are to address at least the above-mentioned problems and/or disadvantages and to provide at least the advantages described below. Accordingly, an aspect of the invention is to provide an electronic device acquiring and providing an optimum setting value provided to an air conditioning device in consideration of energy consumption, and a control method thereof.

## Solution to Problem

In accordance with an aspect of the invention, an electronic device is provided. The electronic device includes a communicator comprising a circuitry, a processor electronically connected to the communicator and controlling the communicator, and a memory electrically connected to the processor. The memory is configured to store instructions to control the processor to transmit control information, which is acquired by applying target information of an air conditioning system to a learning network model, to a plurality of air conditioning devices included in the air conditioning system via the communicator. The learning network model is configured to, based on identifying that an error is present in an estimation result of energy consumption acquired based on a learning data, generate virtual data and be retrained based on the generated virtual data.

The learning network model may be configured to re-estimate energy consumption based on the learning data and the virtual data, and to be retrained based on a result of re-estimation.

The learning network model may be configured to acquire a setting value of each of the plurality of air conditioning devices, and minimize a sum of energy consumption of each of the plurality of air conditioning devices from among the re-estimated energy consumption.

The learning network model may be configured to learn a weight of a neural network included in the learning network model by using the learning data and the virtual data.

The learning data may include a previous driving data of each of the plurality of air conditioning devices. The previous driving data may include at least one of a setting value, energy consumption, outdoor air condition, air conditioning load, or indoor temperature and humidity data of each of the plurality of air conditioning devices.

The learning network model may be configured to identify whether an error with respect to an estimation result of the energy consumption is present based on a predetermined condition including a law of physics.

The learning network model is configured to generate the virtual data based on a learning data of a case where the estimated energy consumption is normal. The learning data is a data corresponding to a first condition. The virtual data is a data corresponding to a second condition which is different from the first condition.

The learning network model may be configured to identify at least one of an application time point or application duration of the acquired control information based on an air conditioning load and an outdoor air condition, and output the identified application time point or application duration of the acquired control information.

The learning network model may be configured to transmit the control information to the plurality of air conditioning devices, and based on at least one of an indoor temperature data or humidity data acquired via the communicator not falling within a predetermined range, to relearn the learning data and the virtual data based on the control information.

The air conditioning system may be a heating, ventilating, and air conditioning (HVAC) device.

In accordance with another aspect of the invention, a control method of an electronic device is provided.

The control method includes applying target information of an air conditioning system to a learning network model, and transmitting control information acquired by applying target information of the air conditioning system to the learning network model to a plurality of air conditioning devices included in the air conditioning system. The learning network model is a learning network model configured to, based on identifying that an error is present in an estimation result of energy consumption acquired based on a learning data, generate virtual data and be retrained based on the virtual data.

## Advantageous Effects of Invention

According to the various embodiments of the invention as described above, it is possible to provide an optimum setting value to an air conditioning device for a pleasant indoor space.

If learning data is insufficient, a virtual data may be generated and a learning model may be corrected. In this case, the accuracy of prediction of energy consumption is increased by the corrected learning model and thus, the energy consumption of the air conditioning system can be reduced.

Other aspects, advantages, and salient features of the invention will become apparent to those skilled in the art from the following detailed description, which, taken in conjunction with the annexed drawings, discloses various embodiments of the invention.

## Brief Description of Drawings

The above and other aspects, features, and advantages of certain embodiments of the invention will be more apparent from the following description taken in conjunction with the accompanying drawings, in which:

FIG. 1 is a diagram illustrating an electronic system, according to an embodiment of the invention;

FIG. 2 is a block diagram provided to explain an operation of an electronic device, according to an embodiment of the invention;

FIG. 3 is a block diagram provided to explain a detailed configuration of an electronic device according to an embodiment of the invention;

FIG. 4 is a diagram illustrating a learning and relearning operation of a learning network model, according to an embodiment of the invention;

FIG. 5A is a diagram illustrating a situation where it is identified that an estimation result of a learning network model has an error, according to an embodiment of the invention;

FIG. 5B is a diagram illustrating a situation where it is identified that an estimation result of a learning network model has an error, according to an embodiment of the invention;

FIG. 6A is a diagram illustrating an operation of identifying an application time of control information, according to an embodiment of the invention;

FIG. 6B is a diagram illustrating an operation of identifying an application time of control information, according to an embodiment of the invention;

FIG. 7 is a diagram illustrating an operation of acquiring an optimum control setting value, according to an embodiment of the invention;

FIG. 8A is a diagram illustrating an operation of a learning part and a recognition part, according to an embodiment of the invention;

FIG. 8B is a diagram illustrating an operation of a learning part and a recognition part, according to an embodiment of the invention; and

FIG. 9 is a flowchart provided to explain a control method of an electronic device, according to an embodiment of the invention.

The same reference numerals are used to represent the same elements throughout the drawings.

## Best Mode for Carrying out the Invention

[0022] -

## Mode for the Invention

The following description with reference to the accompanying drawings is provided to assist in a comprehensive understanding of various embodiments of the invention as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope of the present invention as defined by the claims. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of various embodiments of the invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Hereinafter, the terms used in embodiments will be briefly explained, and embodiments will be described in greater detail with reference to the accompanying drawings.

The terms used in the embodiments of the invention are general terms which are widely used now and selected considering the functions of the invention. However, the terms may vary depending on the intention of a person skilled in the art, a precedent, or the advent of new technology. In addition, in a specified case, the term may be arbitrarily selected. In this case, the meaning of the term will be explained in the corresponding description. Accordingly, the terms used in the description should not necessarily be construed as simple names of the terms, but be defined based on meanings of the terms and overall contents of the invention.

The embodiments may vary, and may be provided in different embodiments. Various embodiments will be described with reference to accompanying drawings. However, this does not necessarily limit the scope of the embodiments to a specific embodiment form. Instead, modifications, equivalents and replacements included in the disclosed concept and technical scope of this specification may be employed. While describing embodiments, if it is determined that the specific description regarding a known technology obscures the gist of the invention, the specific description is omitted.

It is to be understood that the singular forms "a," "an," and "the" include plural referents unless the context clearly dictates otherwise. The terms "include", "comprise", "is configured to," etc., of the description are used to indicate that there are features, numbers, operations, elements, parts or combination thereof, and they should not exclude the possibilities of combination or addition of one or more features, numbers, operations, elements, parts or a combination thereof.

The expression "at least one of A and/or B" should be construed as referring to any one of "A", "B" and "A and B".

The expression "1", "2", "first", or "second" as used herein may modify a variety of elements, irrespective of order and/or importance thereof, and only to distinguish one element from another. Accordingly, without limiting the corresponding elements.

If it is described that a certain element (e.g., first element) is "operatively or communicatively coupled with/to" or is "connected to" another element (e.g., second element), it should be understood that the certain element may be connected to the other element directly or through still another element (e.g., third element).

In the invention, a 'module' or a 'part' performs at least one function or operation and may be implemented by hardware or software or a combination of the hardware and the software. In addition, a plurality of 'modules' or a plurality of 'parts' may be integrated into at least one module and may be realized as at least one processor except for 'modules' or 'parts' that should be realized in a specific hardware. Also, the term "user" may refer to a person who uses an electronic device or a device (e.g., an artificial intelligence (AI) electronic device) that uses the electronic device.

A calculation of the invention may be performed by a machine learning-based recognition system, and in this invention, as a classification system by a series of machine learning algorithm based on neural networks, an example of a deep learning-based recognition system will be described.

A deep learning-based recognition system may include at least one classifier, and the classifier may correspond to one or more processors. A processor may be implemented as an array of a number of logic gates, and may also be implemented as a combination of a general-purpose microprocessor with a memory on which a program capable of being executed in that microprocessor is stored.

The classifier may be implemented as a classifier based on neural network, a support vector machine (SVM), an Adaboost classifier, a Bayesian classifier, and a perception classifier. An embodiment in which a classifier is implemented as a convolutional neural network (CNN) will be described below. A classifier based on neural network is a computation model which is implemented to simulate a calculation capability of a biological system using a large number of artificial neurons connected via a cable, and performs a recognition action or learning process of human via a cable with a connection strength (weight). However, the classifier of the invention is not limited thereto, and may be implemented as various classifiers described above.

A general neural network may include an input layer, a hidden layer and an output layer. The hidden layer may include one or more layers according to necessity. To train this neural network, a back propagation algorithm may be used.

When a data is input to an input layer of a neural network, a classifier may train the neural network so that an output data for the input learning data is output to an output layer of the neural network. When characteristic information extracted from a captured image is input, a pattern of the characteristic information may be classified as any one class from among multiple classes by means of the neural network, and the classification result may be output.

The processor is a classification system by a series of machine learning algorithms based on neural networks, which may use a recognition system based on deep learning.

The above and other aspects of the invention will become more apparent by describing in detail embodiments thereof with reference to the accompanying drawings. However, embodiments may be realized in a variety of different configurations, and not limited to descriptions provided herein. Further, those that are not relevant to the description are omitted so as to describe embodiments more clearly, and similar drawing reference numerals are used for the similar elements throughout the description.

Hereinafter, embodiments will be described in greater detail with reference to the accompanying drawings.

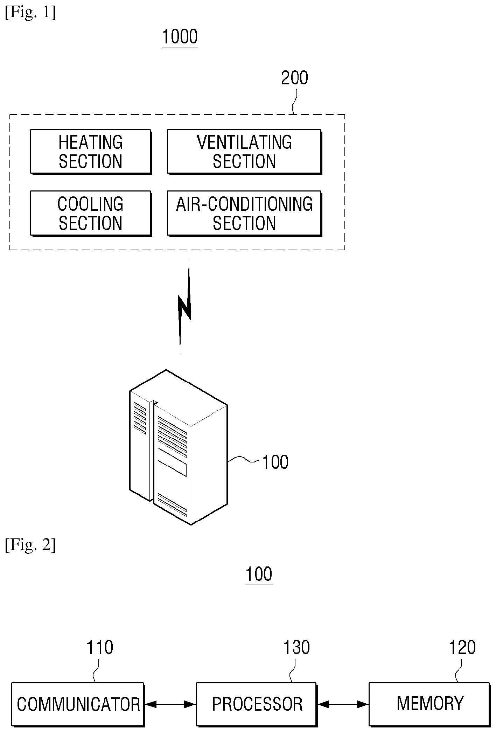

FIG. 1 is a diagram illustrating an electronic system, according to an embodiment of the invention.

Referring to FIG. 1, an electronic system 1000 may include an electronic device 100 and an air conditioning system 200.

The electronic device 100 is a device which is capable of controlling the air conditioning system 200. The electronic device 100 is a device including a learning model based on machine learning, and may be implemented as a server device controlling the air conditioning system 200. However, the example is not limited thereto, and the electronic device 100 may be implemented as a desktop personal computer (PC), a laptop PC, a smartphone, a tablet PC, etc., and may be implemented as software according to circumstances.

The air conditioning system 200 is a system including a heating section, a cooling section, a ventilating section and an air-conditioning section, and which may refer to a system in which a plurality of devices related to air conditioning are interlocked with each other and implemented. An air conditioning system may include various devices such as a boiler, an air conditioner, a ventilator, a freezer, a cooling tower, and an air handling unit (AHU).

Meanwhile, when pleasantness of indoor air and effective energy consumption are considered, comprehensive control all air conditioning devices included in the air conditioning system 200 may be desired. Various embodiments of the invention to effectively control the air conditioning system 200 through a learning network model based on machine learning are described below.

FIG. 2 is a block diagram provided to explain an operation of an electronic device, according to an embodiment of the invention.

Referring to FIG. 2, the electronic device 100 includes a communicator 110 comprising a circuitry, a memory 120, and a processor 130.

The communicator 110 is configured to transmit and receive data with a plurality of air conditioning devices included in the air conditioning system 200. The communicator 110 is capable of communicating with a plurality of air conditioning devices according to a wired/wireless communication scheme. For example, the communicator 110 may use various communication schemes such as Bluetooth (BT), WI-FI, Zigbee, infrared (IR), serial interface, universal serial bus (USB), near field communication (NFC), vehicle to everything (V2X), and cellular.

The communicator 110 may transmit control information output by a learning network model to each of a plurality of air conditioning devices according to the control of the processor 130. In addition, the communicator 110 may acquire data relating to a temperature and humidity measured in an indoor space.

The memory 120 is electrically connected to the processor 130, and may be implemented as a memory of various forms. For example, a memory embedded in the electronic device 100 may be implemented as at least one of a volatile memory (e.g., dynamic RAM (DRAM), static RAM (SRAM), synchronous dynamic RAM (SDRAM)) and a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), a hard disk drive (HDD) or a solid state drive (SSD). A memory detachable from the electronic device 100 may be implemented as a memory card (e.g., compact flash (CF), secure digital (SD), micro secure digital (Micro-SD), mini secure digital (Mini-SD), extreme digital (xD), and multi-media card (MMC)), or an external memory (e.g., USB memory) connectable to a USB port.

The memory 120 may store a command or data regarding at least one of the other elements of the electronic device 100. For example, the memory 120 may store an instruction for controlling operations of the processor 130. The memory 120 is configured to store instructions that control the processor 130 to control information acquired by applying target information of the air conditioning system 200 to a learning network model to a plurality of air conditioning devices included in the air conditioning system 200 via the communicator 110. The target information of the air conditioning system 200 may be information relating to a goal to be achieved by the air conditioning system 200 in a particular condition, such as information allowing energy consumption to be minimized in a set mode, information allowing energy consumption to be minimized while the set indoor temperature or humidity is satisfied.

In addition, the memory 120 may store a learning network model according to an embodiment of the invention. The learning network model may be a model that estimates energy consumption occurring in the air conditioning system 200 based on a learning data.

The processor 130 may be electrically connected to the memory 120, and control overall operations of the electronic device 100.

According to an embodiment of the invention, the processor 130 may be implemented as a digital signal processor (DSP) for processing digital signals, a microprocessor, and a time controller (TCON). However, the example is not limited thereto. The processor 140 may include one or more from among various processing circuitry, such as, for example, and without limitation, one or more of a dedicated processor, a central processing unit (CPU), a micro controller unit (MCU), a micro processing unit (MPU), a controller, application processor (AP), communication processor (CP), or an ARM processor, or may be defined the corresponding term. In addition, the processor 130 may be implemented as a system on chip (SoC) in which a processing algorithm is mounted and a large scale integration (LSI), and may also be implemented in the form of a field programmable gate array (FPGA). The processor 130 may execute computer executable instructions stored in the memory 120 so that various functions may be thereby performed.

According to an embodiment of the invention, the processor 130 is electrically connected to the communicator 110, and is configured to control the communicator 110.

In addition, the processor 130 may apply target information of the air conditioning system 200 according to an instruction stored thereon to a learning network model, and accordingly acquire control information output from the learning network model, and transmit the acquired control information to a plurality of air conditioning devices included in the air conditioning system 200. The target information of the air conditioning system 200 may be information relating to a goal to be achieved by the air conditioning system 200 in a particular condition, such as information allowing energy consumption to be minimized in a set mode, information allowing energy consumption to be minimized while the set indoor temperature or humidity is satisfied. For example, target information allowing energy consumption of a plurality of air conditioning devices included in an air conditioning system to be minimized while an indoor temperature of a range of 23 °C to 25 °C (73 to 77 °F) may be applied to the learning network model. The plurality of air conditioning devices may include not only a case where air conditioning devices of different types are included in the air conditioning system 200, but also a case where air conditioning devices of the same type are included in a plurality of air conditioning systems 200.

In the example described above, a plurality of air conditioning devices are included in the air conditioning system 200, but it is possible that only one air conditioning device is included in the air conditioning system 200.

The learning network model may be a model that estimates energy consumption of the air conditioning system 200 based on a learning data. The learning network model may be implemented as a black box model constructed based on an existing data.

The learning data may include an existing driving data of each of the plurality of air conditioning devices. The driving data may include at least one of a setting value, energy consumption, outdoor air condition, air conditioning load or indoor temperature/humidity data of each of the plurality of air conditioning devices. For example, if a previous outdoor air temperature is 30 °C (86 °F), information relating to energy consumption occurring in an air conditioner, etc. may be used as learning data in order to maintain an indoor temperature of 25 °C (77 °F).

When it is identified that an estimation result of energy consumption acquired based on learning data has an error, the learning network model is configured to generate a virtual data and be retrained based on the generated virtual data. The learning network model may be corrected or updated based on the generated virtual data.

For example, the learning network model may identify whether an estimation result of energy consumption includes errors on the basis of a predetermined condition including a law of physics.

For example, if a processed heat quantity of a specific air conditioning device increases, energy consumption of the corresponding air conditioning device must increase. However, if energy consumption of the corresponding air conditioning device estimated by the learning network model remains unchanged or decreases even when a processed heat quantity increases, then the learning network model may identify that an error has occurred in the estimation result of energy consumption. For example, if a desired temperature input by a user decreases, and energy consumption of an air conditioner remains unchanged or reduces even when the air conditioner is operated, the learning network model may identify that an error has occurred in the energy consumption estimation result.

If learning data is insufficient or an incorrect learning data is input to the learning network model, an error may occur in the estimation result of energy consumption. In this case, the learning network model may be retrained based on virtual data.

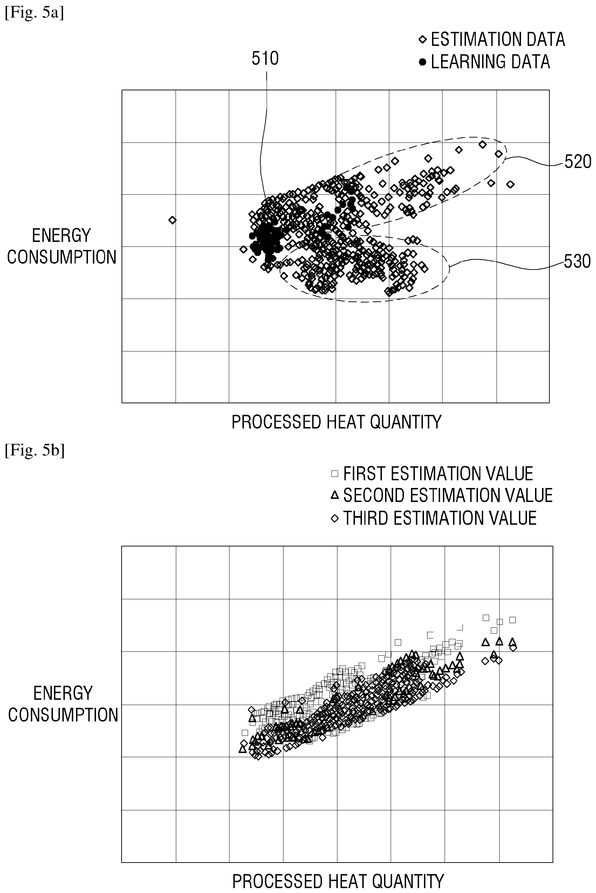

The learning network model re-estimates energy consumption based on the learning data and the generated virtual data, and is retrained based on the re-estimation result. The learning network model generates virtual data based on learning data in a case where the estimated energy consumption is normal. The learning data is data corresponding to a first condition, and is data corresponding to a second condition which is different from the first condition. For example, if an error has occurred in an estimation result estimated when a cold water temperature is 6 °C (43 °F) (first condition), the learning network model may generate virtual data based on data of a case where a cold water temperature is 12 °C (54 °F) (second condition) in which the energy consumption is identified to be normal. The learning network model generates virtual data based on a normal data of which a condition is different from a data in which an error has occurred, and is retrained based on the generated virtual data. This is described below with reference to FIGS. 5A and 5B.

FIGS. 5A and 5B are diagrams illustrating a situation where it is identified that an estimation result of a learning network model has an error, according to various embodiments of the invention

Referring to FIGS. 5A and 5B, the learning network model may estimate energy consumption of a specific air conditioning device or an air conditioning system on the basis of a learning data 510. Here, the learning data 510 may be data on energy consumption according to a processed heat quantity of a specific air conditioning device in the past.

Meanwhile, the learning network model clusters the estimation result as shown in FIG. 5A.

Referring to FIG. 5A, the estimation result is classified into two groups according to a relationship between a processed heat quantity and energy consumption of the air conditioning device. The estimation result is classified into a first group 520 in which a processed heat quantity is in proportion to energy consumption, and a second group 530 in which a processed heat quantity is not in proportion to energy consumption. the second group 530 is a result that energy consumption remains unchanged or decreases even when a processed heat quantity of the air conditioning device is increased, which may be a result in violation of a law of physics. In this regard, the learning network model identifies that an error has occurred in the estimation result of energy consumption. Accordingly, the learning network model generates virtual data, and is retrained based on the generated virtual data.

The learning network model is configured to generate virtual data based on learning data in a case where the estimated energy consumption is normal. For example, it will be assumed that an error has occurred in an estimation result when the cold water temperature is 6 °C (43 °F), and that an error has never occurred in an estimation result when the cold water temperature is 12 °C (54 °F). In this case, the learning network model may generate virtual data in a case where the cold water temperature is 6 °C (43 °F) using a data in a case where the cold water temperature is 12 °C (54 °F) as the learning data.

The learning network model identifies whether an error is present in an estimation result in energy consumption through linear regression analysis. An equation related to linear regression analysis is shown below.

$$E_{sys-C1}=a\times(Q_{ch})^2+b\times Q_{ch}+c$$

... Equation 1

$$E_{sys-C2}=\alpha\times E_{sys-C1}$$
$$E_{sys-C3}=\beta\times E_{sys-C1}$$

... Equation 2

$$E_{sys-C4}=f(Modification\ factor)\times E_{sys-C1}$$

... Equation 3

In Equations 1-3, Esys denotes energy consumption of the air conditioning system 200, and C1, C2, C3 and C4 denote different conditions. For example, the C1 may be a condition that the cold air temperature is 12 °C (54 °F), the C2 may be a condition that the cold air temperature is 10 °C (50 °F), the C3 may be a condition that the cold air temperature is 8 °C (46 °F), and the C4 may be a condition that the cold air temperature is 6 °C (43 °F). Here, virtual data to be generated by the learning network model may be data on the C4. Meanwhile, the cold water temperature and a specific temperature value are merely exemplary, and various modifications may be made thereto.

Meanwhile, Qch denotes a processed heat quantity, a, b and c denote parameters of linear regression analysis, α and β denote correction coefficients indicating an increase and decrease rate of energy consumption, and f denotes a function of a correction coefficient and a condition.

For example, it will be assumed that the C1, C2 and C3 are cold water temperatures of 12 °C (54 °F), 10 °C (50 °F) and 8 °C (46 °F), in a case where an estimated energy consumption is normal. In this regard, the learning network model may acquire a, b, c, α and β on the basis of energy consumption when a cold water temperature is respectively 12 °C, 10 °C and 8 °C.

Thereafter, the learning network model may generate virtual data on energy consumption when the cold water temperature is 6 °C (43 °F), based on Equation 3. For example, the learning network model may generate virtual data when the cold water temperature is 6 °C (43 °F), based on " Esys_T6=f(Modification factor)· Esys_T12".

Thereafter, the learning network model may be corrected based on the generated virtual data.

FIG. 5B is an estimation result acquired by re-estimating a learning network model retrained based on virtual data according to an embodiment of the invention.

Referring to FIG. 5B, data such as the second group 530 in which an error has occurred may not be estimated, and data in a similar form to the first group 520 in which energy consumption is increased with the increase in processed heat quantity may be estimated by the retrained learning network model. For example, the retrained learning network model may estimate energy consumption in a case where the cold water temperature is 6 °C (43 °F) based on the generated virtual data, and cluster the estimated energy consumption.

If learning data is insufficient or an incorrect learning data is input, a normal result may be re-estimated based on artificially-generated virtual data.

Referring back to FIG. 2, based on an estimation result of energy consumption occurring in the air conditioning system 200, when energy consumption is minimized in a predetermined condition, the learning network model may acquire control information applied to a plurality of air conditioning devices.

For example, the learning network model may acquire a setting value of each of the plurality of air conditioning devices so that the sum of energy consumption of each of the plurality of air conditioning devices from among the re-estimated energy consumption is minimized. The setting value is information included in the control information, which may include an input value input to the air conditioning device, an operation mode of the air conditioning device, etc. For example, the setting value may be a cold water temperature, coolant temperature information, etc.

Changing a setting value of one air conditioning device may affect energy consumption occurring in another air conditioning device. For example, if a setting value to increase a cold water temperature of a freezer is input, a power consumption of a pump may be increased with the increase in cold water pump flow and accordingly, an air supply temperature of the AHU may be increased and a power consumption of a supply fan of the AHU may be increased. As a result, an indoor temperature and humidity rises. A change of setting value of one air conditioning device may affect another air conditioning system and thus, energy consumption of the air conditioning system 200 may be changed. The learning network model according to an embodiment of the invention may acquire a setting value to minimize energy consumption of the air conditioning system 200 rather than some air conditioning device, and the processor 130 may transmit the acquired setting value to each of a plurality of air conditioning devices.

The learning network model may identify and output at least one of an application time point or application duration of control information acquired based on an air conditioning load and an outdoor air condition. According to the acquired application time point or application duration of the control information, energy consumption occurring in the air conditioning system 200 may be changed. For example, the learning network model may, based on a size of a predetermined air conditioning load, if the size of the air conditioning load is less than a predetermined value, apply the acquired setting value for a time period where an outdoor air condition is a first condition. If a size of the air conditioning load is less than 1000 KWh, the learning network model may apply a setting value acquired during a time period where an outdoor air temperature changes by 2 °C to the air conditioning device.

For example, the learning network model may, based on a size of a predetermined air conditioning load, if the size of the air conditioning load is less than a predetermined value, apply the acquired setting value for a time period where an outdoor air condition is a first condition. For example, if a size of the air conditioning load is less than 1000 KWh, the learning network model may apply a setting value acquired during a time period where an outdoor air temperature changes by 2 °C to the air conditioning device.

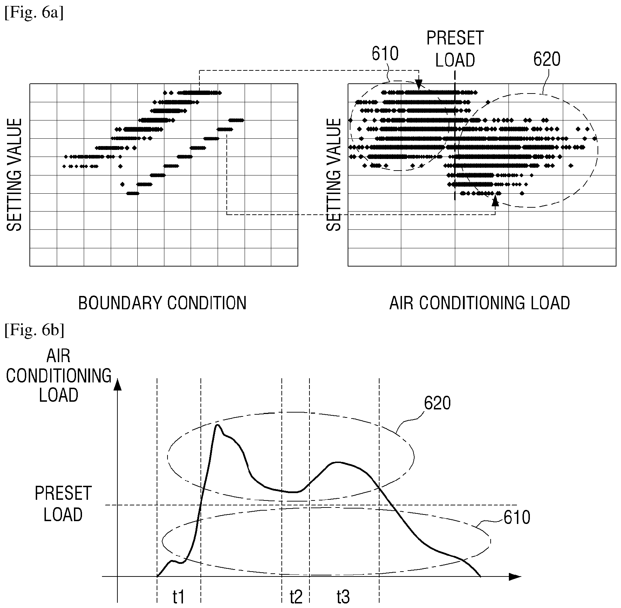

The outdoor air condition may include an external temperature or humidity. In addition, a predetermined air conditioning load may be of multiple sizes and accordingly, an outdoor air condition may be further subdivided. This is described below in detail with reference to FIGS. 6A and 6B.

FIGS. 6A and 6B are diagrams illustrating an operation of identifying an application time of control information, according to various embodiments of the invention.

For example, it will be assumed that a size of a predetermined air conditioning load is 1000 KWh. The learning network model may divide the air conditioning load into two groups based on 1000 KWh. For example, the division may be made into a first group 610 in which a size of the predetermined air conditioning load is less than 1000 KWh, and a second group 620 in which a size of the predetermined air conditioning load is larger than or equal to 1000 KWh. The learning network model may identify a time when the control information is applied in the first group 610 as a time when an outdoor air condition is changed to the first condition. In addition, the learning network model may identify a time when the control information is applied in the second group 620 as a time when an outdoor air condition is changed to the second condition.

For example, the processor 130 may control control information acquired during a period where an outdoor air temperature changes by 2 °C in the first group 610 to be applied to a plurality of air conditioning devices. For example, the processor 130 may control control information acquired during a period where an outdoor air temperature changes by 2 °C in the first group 620 to be applied to a plurality of air conditioning devices. This will be described below in detail with reference to FIG. 6B.

FIG. 6B is a diagram illustrating an air conditioning load with time. FIG. 6B illustrates an application time point and application duration of acquired control information.

In FIG. 6B, it is assumed that a size of a predetermined air conditioning load is 1000 KWh, that the first condition is an outdoor air temperature change of 2 °C, and that the second condition is an outdoor air temperature change of 1 °C.

The learning network model may calculate and output a t1 period where an outdoor air temperature is changed by 2 °C in the first group 610. The processor 130 may transmit a control signal to a plurality of air conditioning devices so that the plurality of air conditioning devices are driven according to control information which is acquired during the t1 period output from the learning network model.

The learning network model may calculate and output a t2 period where an outdoor air temperature is changed by 2 °C in the first group 620. The processor 130 may transmit a control signal to a plurality of air conditioning devices so that the plurality of air conditioning devices are driven according to control information which is acquired during the t2 period output from the learning network model. As described above, the processor 130 may control a control signal to the plurality of air conditioning devices so that the plurality of air conditioning devices are driven according to control information acquired during a t3 period calculated by the learning network model.

The learning network model may identify and output at least one of an application time point or application duration of control information acquired based on an air conditioning load and an outdoor air condition.

Referring back to FIG. 2, the learning network model may transmit the acquired control information to a plurality of air conditioning devices. If at least one of indoor temperature data or humidity data acquired via the communicator 110 does not belong to a predetermined range, relearn learning data and virtual data based on the control information. The acquired control information may be transmitted to the plurality of air conditioning devices according to the control of the processor 130.

For example, the learning network model may identify whether at least one of an indoor temperature or humidity changed by the plurality of air conditioning devices driven based on the acquired setting value belongs to a predetermined range.

A predetermined range regarding temperature and humidity is a range input by the user or a range recommended for an indoor space, which may be information acquired from an external server (not illustrated).

For example, the plurality of air conditioning devices may perform driving according to control information acquired by the learning network model. Accordingly, an indoor temperature may be changed, and it will be assumed that a changed indoor temperature does not fall within a range of 23 °C to 25 °C (73 to 77 °F) corresponding to the predetermined range. For example, if a changed indoor temperature 26 °C (79 °F), the learning network model may identify data indicating that an indoor temperature does not fall within the predetermined range when the corresponding control information is applied, as a learning data and relearn the identified data. The learning network model may exclude the corresponding control information from the final control information, and acquire new control information controlling at least one of indoor temperature data or humidity data to fall within the predetermined range. The specific value of the predetermined indoor temperature is only an example.

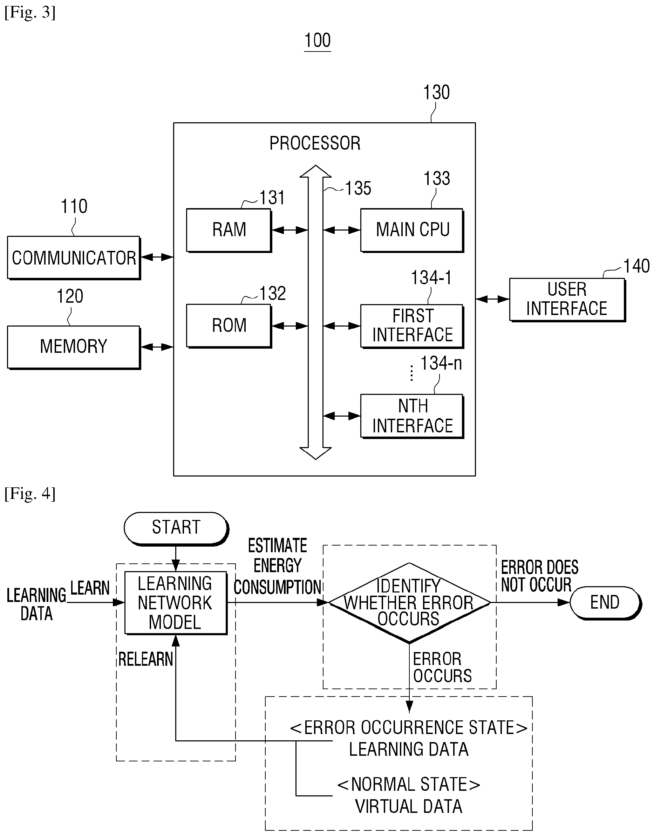

A learning and relearning operation of the learning network model described above will be described with reference to FIG. 4.

FIG. 4 is a diagram illustrating a learning and relearning operation of a learning network model, according to an embodiment of the invention.

Referring to FIG. 4, the learning network model may perform learning based on learning data. The learning data may include an existing driving data of each of the plurality of air conditioning devices. The driving data may include at least one of a setting value, energy consumption, outdoor air condition, air conditioning load or indoor temperature/humidity data of each of the plurality of air conditioning devices.

The learning network model may estimate energy consumption of the air conditioning system 200 based on a learning data.

The learning network model may identify whether an error is present in an estimation result of energy consumption, and when it is identified that an error has occurred, generate virtual data. Thereafter, the learning network model may perform relearning based on initially-input learning data and the generated virtual data. The learning network model then may re-estimate energy consumption based on the learning data and the virtual data.

The learning network model may be retrained based on re-estimated energy consumption.

Accordingly, the learning network model may acquire control information controlling an indoor temperature and humidity to fall within the predetermined range and minimizing energy consumption, and transmit the acquired control information to a plurality of air conditioning devices.

As a result, the air conditioning system 200 may maintain a pleasant indoor air while reducing energy consumption.

The learning network model may learn a weight of a neural network included in the learning network model on the basis of learning data and virtual data.

The air conditioning system 200 described above may be a heating, ventilating, and air conditioning (HVAC) device.

A learning network model to identify whether an error is present in an estimation result of energy consumption and a learning network model to generate virtual data may be implemented as separate models. For convenience of explanation, an additional model generating virtual data will be referred to as a correction model. In this case, the learning network model may identify whether an error is present in the acquired estimation result of energy consumption based on the learning data. When it is identified that an error is present, the processor 130 may construct a correction model, and the correction model may generate virtual data on the basis of learning data of a case where the estimated energy consumption is normal. Thereafter, the learning network model may be retrained based on the virtual data generated by the correction model.

FIG. 3 is a block diagram provided to explain a detailed configuration of an electronic device according to an embodiment of the invention.

Referring to FIG. 3, the electronic device 100 includes a communicator 110 comprising a circuitry, a memory 120, and a processor 140. The electronic device 100 may include a user interface 140. The elements of FIG. 3 corresponding to the elements of FIG. 2 will not be specifically explained below.

The communicator 110 is a configuration capable of communicating with a plurality of air conditioning devices. The communicator 110 may include a Wi-Fi module (not illustrated), a Bluetooth module (not illustrated), a local area network (LAN) module, and a wireless communication module (not illustrated). The respective communication modules may be implemented as at least one hardware chip. The wireless communication module may include at least one communication chip which performs communication according to various wireless communication standards such as Zigbee, 3rd Generation (3G), 3rd Generation Partnership Project (3GPP), Long Term Evolution (LTE), LTE Advanced (LTE-A), 4th Generation (4G), 5th Generation (5G), in addition to the communication schemes described above. However, this is only an example, and the communicator 110 may communicate with a plurality of air conditioning devices by using at least one communication chip from among various communication modules.

The memory 120 may be realized as an internal memory such as ROM (for example, electrically erasable programmable read-only memory (EEPROM)), RAM and the like included in the processor 130, or may be realized as a memory separate from the processor 130. In this case, the memory 120 may be realized in the form of a memory embedded in the electronic device 100, or may be realized in the form of a memory that is detachable from the electronic device 100 according to usage of data storage. For example, data for driving the electronic device 100 may be stored in a memory embedded in the electronic device 100, and data for an extension function of the electronic device 100 may be stored in a memory that is detachable from the electronic device 100. A memory embedded in the electronic device 100 may be implemented as at least one of a volatile memory (e.g., dynamic RAM (DRAM), static RAM (SRAM), synchronous dynamic RAM (SDRAM)) and a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), a hard drive or a solid state drive (SSD). A memory detachable from the electronic device 100 may be implemented as a memory card (e.g., compact flash (CF), secure digital (SD), micro secure digital (Micro-SD), mini secure digital (Mini-SD), extreme digital (xD), and multi-media card (MMC)), or an external memory (e.g., USB memory) connectable to a USB port.

The processor 130 may control the overall operations of the electronic device 100 using various programs stored in the memory 120.

The processor 130 may include a random access memory (RAM) 131, a read only memory (ROM) 132, a main central processing unit (CPU) 133, first through nth interfaces 134-1 through 134-n, and a bus 135.

The RAM 131, the ROM 132, the main CPU 133, the first through nth interface 134-1 through 134-n, etc. may be connected to each other via the bus 135.

The ROM 132 may store a set of instructions for system booting. If a turn-on command is input and power is supplied, the main CPU 133 may copy an O/S stored in the memory 120 onto the RAM 131 according to an instruction stored in the ROM 132, and execute the O/S and boot the system. When booting is completed, the main CPU 133 may copy various application programs stored in the memory 120 onto the RAM 131, and execute the application programs copied onto the RAM 131 and perform various operations.

The main CPU 133 accesses the memory 120 to perform booting using the OS stored in the memory 120. In addition, various operations may be performed using the various programs, content data, and the like stored in the memory 120.

The first to nth interface 134-1 to 134-n may be connected to the various elements described above. One of the interfaces may be a network interface which is connected to an external device via a network.

The user interface 140 may be implemented as a device such as a button, a touch pad, a mouse and a keyboard, or may be implemented as a touch screen which is capable of performing a display function and a manipulation input function together. The button may be a button of various types such as a mechanical button, touch pad and wheel, which is formed in an arbitrary area such as a front surface part, lateral surface part and rear surface part of an exterior of main body of the electronic device 100.

The user interface 140 may be implemented as a touch screen of a mutual layer structure with a touch pad. The touch screen may be configured to detect not only a position and area of a touch input, but also a pressure of a touch input.

In a case that the user interface is implemented as a display, the user interface 140 may be implemented as a display of various forms such as a liquid crystal display (LCD), an organic light-emitting diode (OLED) display, a liquid crystal on silicon (LCoS) display, a digital light processing (DLP) display, a quantum dot (QD) display, a micro light-emitting diode (Micro LED) display, and the like.

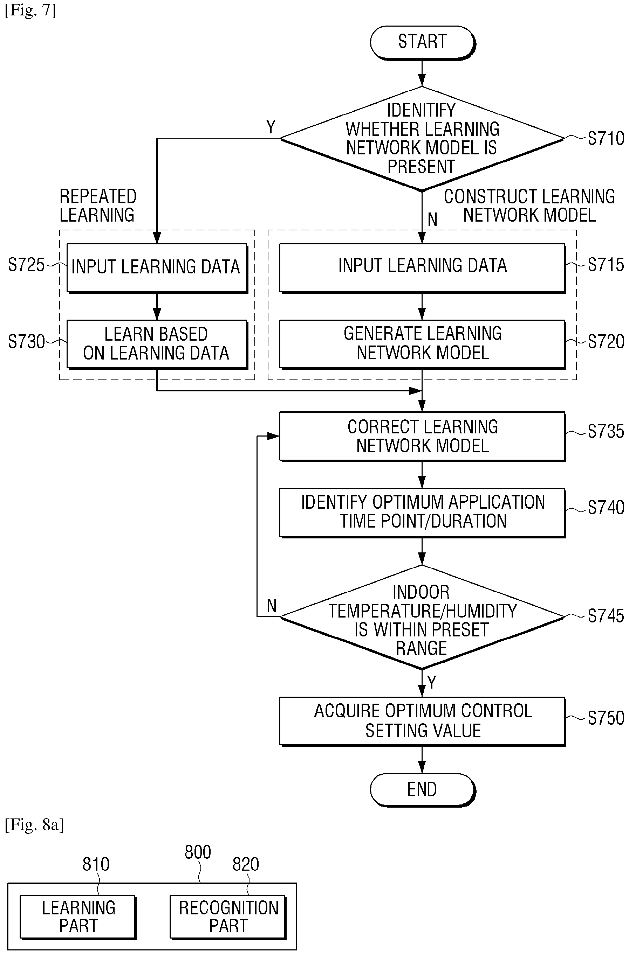

FIG. 7 is a diagram illustrating an operation of acquiring an optimum control setting value, according to an embodiment of the invention.

Referring to FIG. 7, the processor 130 may identify whether a learning network model is present, at operation S710. If a previously-constructed learning network model is not present, S710-N, the processor 130 may perform an operation for constructing a learning network model. For example, the processor 130 may acquire learning data, and input the learning data to a model to be generated, at operation S715. The learning data may include an existing driving data of each of the plurality of air conditioning devices. The driving data may include at least one of a setting value, energy consumption, outdoor air condition, air conditioning load or indoor temperature/humidity data of each of the plurality of air conditioning devices. The processor 130 may generate a learning network model on the basis of the input learning data, at operation S720.

If the previously-constructed learning network model is present, S710-Y, the processor 130 may input the learning data to the learning network model, S725, and the learning network model is learned based on the learning data, S730.

The learning network model may be a model that estimates energy consumption of the air conditioning system based on a learning data. The learning network model may be implemented as a black box model constructed based on an existing data.

The learning network model may be corrected when it is identified that an error is present in an estimation result of energy consumption acquired based on the learning data, at operation S735. For example, the learning network model may identify whether an estimation result of energy consumption includes errors on the basis of a predetermined condition including a law of physics.

The learning network model is configured to generate virtual data and be corrected (retrained) based on the generated virtual data. For example, the learning network model may generate virtual data based on learning data in a case where the estimated energy consumption is normal. For example, if an error has occurred in an estimation result estimated when a cold water temperature is 6 °C (43 °F), the learning network model may generate virtual data based on data of a case where a cold water temperature is 12 °C (54 °F) of which the energy consumption is identified to be normal.

The corrected learning network model may estimate energy consumption occurring in a plurality of air conditioning devices included in the air conditioning system 200. For example, the learning network model may acquire a setting value of each of the plurality of air conditioning devices so that the sum of energy consumption of each of the plurality of air conditioning devices from among the re-estimated energy consumption is minimized. The setting value may include an input value input to the air conditioning device, an operation mode of the air conditioning device, or the like. For example, the setting value may be a cold water temperature, coolant temperature information, etc.

Thereafter, the learning network model may identify at least one of an optimum application time point or application duration of the acquired setting value, at operation S740. For example, the learning network model may, based on a size of a predetermined air conditioning load, if the size of the air conditioning load is less than a predetermined value, apply the acquired setting value for a time period where an outdoor air condition is a first condition. For example, the learning network model may, based on a size of a predetermined air conditioning load, if the size of the air conditioning load is less than a predetermined value, apply the acquired setting value for a time period where an outdoor air condition is a first condition.

The learning network model may identify whether at least one of an indoor temperature or humidity changed by the plurality of air conditioning devices driven based on the acquired setting value belongs to a predetermined range. When at least one of indoor temperature or data or humidity data does not fall within the predetermined range, the learning network model may be recorrected by returning to operation S735.

The learning network model may, when an indoor temperature or humidity changed by a plurality of air conditioning devices driven based on the acquired setting value falls within the predetermined range, identify and acquire the acquired setting value as an optimum setting value at operation S750.

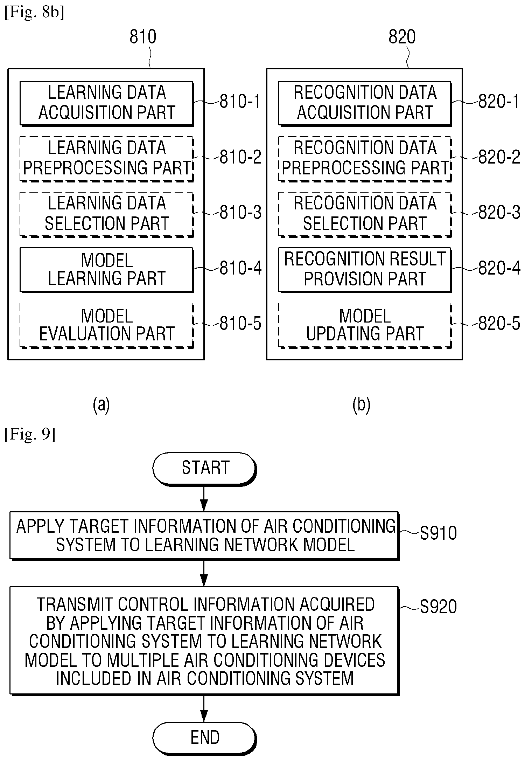

FIGS. 8A and 8B are diagrams illustrating an operation of a learning part and a recognition part, according to various embodiments of the invention.

Referring to FIGS. 8A and 8B, the processor 800 may include at least one of a learning part 810 or a recognition part 820. The processor 800 of FIG. 8 may correspond to a processor 130 of the electronic device 100 and a processor of a data learning server (not illustrated).

The learning part 810 may generate or train a recognition model with criteria for a predetermined context determination. The learning part 810 may generate a recognition model with determination criteria using collected learning data.

For example, the learning part 810 may generate, train or update an object recognition model with criteria for determining energy consumption of a plurality of air conditioning devices included in the air conditioning system 200 by using the existing driving data as learning data.

In addition, the learning part 810 may retrain or update an object recognition model with criteria for determining energy consumption of a plurality of air conditioning devices by using virtual data.

The recognition part 820 may use a predetermined data as input data of a trained recognition model, and estimate a recognition subject included in the predetermined data.

For example, the recognition part 820 may acquire, estimate, or infer data with possibility of realization from among the input data. For example, if input data for controlling an indoor temperature at 100 °C (212 °F) is input, the recognition part 820 may identify this input data as data without possibility of realization, and exclude the input data from the learning data. The possibility of realization may be identified based on whether the data is within a predetermined range.

At least a part of the learning part 810 and at least a part of the recognition part 820 may be implemented as a software module or manufactured in the form of at least one hardware chip, and mounted on the electronic device 100. For example, at least one of the learning part 810 or the recognition part 820 may be manufactured in the form of a hardware chip exclusive for artificial intelligence (AI), or may be manufactured as a part of an existing general processor (e.g., CPU or application processor) or a processor used exclusively for graphic (e.g., GPU), and mounted on the various electronic devices or object recognition devices described above. In this case, the hardware chip exclusive for AI is an exclusive processor specialized for probability computation, which shows high parallel processing performance as compared with the existing general processor, and thus can quickly process a computation operation in the field of AI such as machine learning. In a case that the learning part 810 and the recognition part 820 are implemented as a software module (or a program module including an instruction), the software module may be stored in non-transitory computable readable media. In this case, the software module may be provided by an operating system (OS) or a predetermined application. Alternatively, a part of the software module may be provided by the OS, and the remaining part may be provided by the predetermined application.

The learning part 810 and the recognition part 820 may be mounted on one electronic device or may be respectively mounted on additional electronic devices. For example, one of the learning part 810 and the recognition part 820 may be included in an electronic device, and the other one may be included in an external server. In addition, the learning part 810 and the recognition part 820 may, via a cable or wirelessly, provide model information constructed by the learning part 810 to the recognition part 820. Alternatively, data input to the recognition part 820 may be provided to the learning part 810 as additional learning data.

FIG. 8B is a block diagram of a learning part and a recognition part, according to an embodiment of the invention.

Referring to section (a) of FIG. 8B, the learning part 810 according to an embodiment may include a learning data acquisition part 810-1 and a model learning part 810-4. In addition, the learning part 810 may selectively further include at least one of a learning data preprocessing part 810-2, a learning data selection part 810-3 or a model evaluation part 810-5.

The learning data acquisition part 810-1 may acquire learning data necessary for a recognition model for inferring a recognition subject. According to an embodiment of the invention, the learning data acquisition part 810-1 may acquire an existing driving data of a plurality of air conditioning devices as learning data. The learning data may be data which is collected or tested by the learning part 810 or a manufacturer of the learning part 810.

The model learning part 810-4 may use the learning data to train, the recognition model to include criteria of determination as to how to identify a predetermined recognition subject. For example, the model learning part 810-4 may train the recognition model through supervised learning in which at least a part of the learning data is used as criteria of determination. Alternatively, the model learning part 810-4 may, for example, train itself using the learning data without a particular supervision, and thereby train the recognition model through unsupervised learning to discover determination criteria for identifying a context. Further, the model learning part 810-4 may train the recognition model through, for example, reinforcement learning using feedback as to whether a context determination result according to learning is correct. In addition, the model learning part 810-4 may train the recognition model by using, for example, a learning algorithm including error back-propagation or gradient descent.

In addition, the model learning part 810-4 may learn selection criteria regarding which learning data is to be used to estimate a recognition subject by using input data.

In a case that a plurality of pre-constructed recognition model are present, the model learning part 810-4 may identify a recognition model in which the input learning data and the basic learning data are of high relevance to each other as a recognition model to be learned. In this case, the basic learning data may be pre-classified by data type, and the recognition model may be pre-constructed for each data type. For example, the basic learning data may be pre-classified based on various criteria such as an area in which the learning data is generated, a time when the learning data is generated, a size of the learning data, a genre of the learning data, a generator of the learning data and the like.

When the recognition model is learned, the model learning part 810-4 may store the learned recognition model. In this case, the model learning part 810-4 may store the learned recognition model in the memory 120 of the electronic device. Alternatively, the model learning part 810-4 may store the learned recognition model in a memory of a server connected with the electronic device via a wired or wireless network.

The learning part 810 may further include the learning data preprocessing part 810-2 and the learning data selection part 810-3, in order to improve an analysis result of the recognition model or save resources or time necessary for generating the recognition model.

The learning data preprocessing part 810-2 may preprocess the acquired data so that the acquired data is utilized in learning for context determination. The learning data preprocessing part 810-2 may process the acquired data to a predetermined format so that the model learning part 810-4 may use the acquired data for learning for context determination.

The learning data selection part 810-3 may select data necessary for learning from among the data acquired by the learning data acquisition part 810-1 and the data preprocessed by the learning data preprocessing part 810-2. The selected learning data may be provided to the model learning part 810-4. The learning data selection part 810-3 may select learning data necessary for learning from among the acquired or processed data according to predetermined selection criteria. The learning data selection part 810-3 may also select learning data according to the predetermined selection criteria by learning of the model learning part 810-4.

The data learning part 810 may further include a model evaluation part 810-5 to improve an analysis result of the data recognition model.

The model evaluation part 810-5 may input evaluation data to the recognition model, and when an analysis result output from the evaluation data does not satisfy predetermined criteria, control the model learning part 810-4 to relearn. In this case, the evaluation data may be predefined data to evaluate the recognition model.

For example, from among the analysis result of the learned recognition model regarding the evaluation data, when the number or ratio of evaluation data of which the analysis result is inaccurate exceeds a predetermined threshold, the model evaluation part 810-5 may evaluate that predetermined criteria are not met.

When a plurality of learned recognition models are present, the model evaluation part 810-5 may evaluate whether the respective learned recognition models satisfy the predetermined criteria, and identify a model satisfying the predetermined criteria as a final recognition model. In this case, when a plurality of models satisfying the predetermined criteria are present, the model evaluation part 810-5 may identify any one model or a predetermined number of models which is predetermined in descending order of evaluation score as a final recognition model.

Referring to section (b) of FIG. 8B, the recognition part 820 may include a learning data acquisition part 820-1 and a recognition result provision part 820-4.

In addition, the recognition part 820 may further selectively include at least one of the recognition data preprocessing part 820-2, the recognition data selection part 820-3 or the model updating part 820-5.

The recognition data acquisition part 820-1 may acquire data necessary for context determination. The recognition result provision part 820-4 may apply data acquired by the recognition data acquisition part 820-1 to the learned recognition model as an input value, and identify a context. The recognition result provision part 820-4 may provide an analysis result according to a purpose of data analysis. The recognition result provision part 820-4 may apply, to the recognition model, data selected by the recognition data preprocessing part 820-2 or the recognition data selection part 820-3 which is described below, and acquire the analysis result. The analysis result may be identified by the recognition model.

The learning part 820 may further include the recognition data preprocessing part 820-2 and the recognition data selection part 820-3, in order to improve an analysis result of the recognition model or save resources or time necessary for providing the analysis result.

The learning data preprocessing part 820-2 may preprocess the acquired data so that the acquired data is utilized for context determination. The recognition data preprocessing part 820-2 may process the acquired data to a predefined format so that the recognition result provision part 820-4 may use the acquired data for context determination.

The recognition data selection part 820-3 may select data necessary for context determination from among the data acquired by the recognition data acquisition part 820-1 or the data preprocessed by the recognition data preprocessing part 820-2. The selected data may be provided to the recognition result provision part 820-4. The input data selection part 820-3 may select some or all of the acquired or preprocessed data according to predetermined selection criteria for context determination. In addition, the recognition data selection part 820-3 may select data according to predetermined selection criteria by learning of the model learning part 810-4.

The model updating part 820-5 may control the recognition model to be updated, based on an evaluation on the analysis result provided from the recognition result provision part 820-4. For example, the model updating part 820-5 may provide the recognition result provided from the recognition result provision part 820-4 to the model learning part 810-4, and thereby request the model learning part 810-4 to further learn or update the recognition model.

FIG. 9 is a flowchart provided to explain a control method of an electronic device, according to an embodiment of the invention.

Referring to FIG. 9, the electronic device 100 may apply target information of the air conditioning system 200 to a learning network model, at operation S910. The target information of the air conditioning system 200 may be information relating to a goal to be achieved by the air conditioning system 200 in a particular condition, such as information allowing energy consumption to be minimized in a set mode, information allowing energy consumption to be minimized while the set indoor temperature or humidity is satisfied.

The electronic device 100 may transmit control information acquired by applying the target information of the air conditioning system 200 to the learning network model to a plurality of air conditioning systems included in the air conditioning system 200, at operation S920.

The learning network model may be a model which estimates energy consumption of the air conditioning system 200 based on learning data. When it is identified that an error is present in the acquired estimation result of energy consumption, the learning network model may be a model which generates virtual data and is retrained based on the generated virtual data.

The learning data may include an existing driving data of each of the plurality of air conditioning devices, and the driving data may include at least one of a setting value, energy consumption, outdoor air condition, air conditioning load or indoor temperature/humidity data of each of the plurality of air conditioning devices.

The learning network model may identify whether the estimation result of energy consumption includes errors on the basis of a predetermined condition including a law of physics. For example, if a processed heat quantity of a specific air conditioning device increases, energy consumption of the corresponding air conditioning device must increase. However, energy consumption of the corresponding air conditioning device estimated by the learning network model remains unchanged or decreases even when a processed heat quantity increases, the learning network model may identify that an error has occurred in the estimation result of energy consumption.

When it is identified that an error regarding the estimation result has occurred, the learning network model is configured to generate virtual data. For example, the learning network model is configured to generate the virtual data based on learning data of a case where the estimated energy consumption is normal. The learning data may be data corresponding to a first condition. The virtual data may be data corresponding to a second condition which is different from the first condition. For example, if an error has occurred in an estimation result estimated when a cold water temperature is 6 °C (43 °F), the learning network model may generate virtual data based on data of a case where a cold water temperature is 12 °C (54 °F) of which the energy consumption is identified to be normal. The learning network model may generate virtual data based on a normal data of which a condition is different from a data in which an error has occurred, and may be retrained based on the generated virtual data.

For example, the learning network model may acquire a setting value of each of the plurality of air conditioning devices so that the sum of energy consumption of each of the plurality of air conditioning devices from among the re-estimated energy consumption is minimized.

Changing a setting value of one air conditioning device may affect energy consumption occurring in another air conditioning device. For example, if a setting value to increase a cold water temperature of a freezer is input, a power consumption of a pump may be increased with the increase in cold water pump flow and accordingly, an air supply temperature of the AHU may be increased and a power consumption of a supply fan of the AHU may be increased. As a result, an effect that an indoor temperature and humidity rises finally may occur. A change of setting value of one air conditioning device may affect another air conditioning system and thus, energy consumption of the air conditioning system may be changed. The learning network model according to an embodiment of the invention may acquire a setting value to minimize energy consumption of the air conditioning system 200 rather than some air conditioning device, and the electronic device 100 may transmit the acquired setting value to each of a plurality of air conditioning devices.

The learning network model may identify and output at least one of an application time point or application duration of control information acquired based on an air conditioning load and an outdoor air condition. According to the acquired application time point or application duration of the control information, energy consumption occurring in the air conditioning system 200 may be changed. For example, the learning network model may, based on a size of a predetermined air conditioning load, if the size of the air conditioning load is less than a predetermined value, apply the acquired setting value for a time period where an outdoor air condition is the first condition. For example, if a size of the air conditioning load is less than 1000 KWh, the learning network model may apply a setting value acquired during a time period where an outdoor air temperature changes by 2 °C to the air conditioning device. In contrast, the learning network model may, if the size of the air conditioning load is larger than or equal to a predetermined value, apply the acquired setting value for a time period where an outdoor air condition is the second condition. For example, if a size of the air conditioning load is larger than or equal to 1000 KWh, the learning network model may apply a setting value acquired during a time period where an outdoor air temperature changes by 1 °C to the air conditioning device.

That is, the learning network model may fluidly identify and output at least one of an application time point or application duration of control information acquired based on a size of an air conditioning load and an outdoor air condition.

Referring back to FIG. 2, the learning network model may transmit the acquired control information to a plurality of air conditioning devices, and if at least one of indoor temperature data or humidity data acquired via the communicator 110 does not belong to a predetermined range, relearn learning data and virtual data based on the control information.

For example, the learning network model may identify whether at least one of an indoor temperature or humidity changed by the plurality of air conditioning devices driven based on the acquired setting value belongs to a predetermined range.

A predetermined range regarding temperature and humidity is a range input by the user or a range recommended for an indoor space, which may be information acquired from an external server (not illustrated).

For example, the plurality of air conditioning devices may perform driving according to control information acquired by the learning network model. Accordingly, an indoor temperature may be changed, and it will be assumed that a changed indoor temperature does not fall within a range of 23 °C to 25 °C (74 to 77 °F) corresponding to the predetermined range. For example, if a changed indoor temperature 26 °C (79 °F), the learning network model may identify data indicating that an indoor temperature does not fall within the predetermined range when the corresponding control information is applied, as a learning data and relearn the identified data. The learning network model may exclude the corresponding control information from the final control information, and acquire new control information controlling at least one of indoor temperature data or humidity data to fall within the predetermined range. Here, a specific value of the predetermined indoor temperature is only an example.

The air conditioning system 200 described above may be a HVAC device.

The detailed operation of each of the operations is described above and thus will be omitted herein.

The methods according to the above-described embodiments may be realized as applications that may be installed in the existing electronic device.

The methods according to various embodiments of the invention described above can be implemented by a software/hardware upgrade for existing electronic device.

The above-described embodiments may be executed through an embedded server provided in an electronic device or through at least one external device from among the electronic device and a display device.

The various embodiments described above may be implemented as a software program including an instruction stored on machine-readable (e.g., computer-readable) storage media. The machine is a device which is capable of calling a stored instruction from the storage medium and operating according to the called instruction, and may include an electronic device according to the embodiments described above. When the instruction is executed by a processor, the processor may perform a function corresponding to the instruction directly or using other components under the control of the processor. The instruction may include a code which is generated or executed by a compiler or an interpreter. The machine-readable storage media may be provided in the form of non-transitory storage media. Herein, the term "non-transitory" only denotes that a storage medium does not include a signal but is tangible, and does not distinguish data semi-permanently stored in a storage medium from data temporarily stored in a storage medium.

According to an embodiment of the present invention, the method according to the various embodiments described above may be provided as being included in a computer program product. The computer program product may be traded as a product between a seller and a consumer. The computer program product may be distributed online in the form of machine-readable storage media (e.g., compact disc read only memory (CD-ROM)) or through an application store (e.g., Play Store™). As for online distribution, at least a part of the computer program product may be at least temporarily stored in a server of a manufacturer, a server of an application store, or a storage medium such as memory, or may be temporarily generated.

According to an embodiment of the invention, the various embodiments described above may be embodied in a recording medium that may be read by a computer or a similar device to the computer by using software, hardware, or a combination thereof. In some cases, embodiments described herein may be implemented by processor itself. According to a software implementation, embodiments such as the procedures and functions described herein may be implemented with separate software modules. Each of the software modules may perform one or more of the functions and operations described herein.

Computer instructions for carrying out processing operations of machine according to the various embodiments described above may be stored in non-transitory computer-readable media. Computer instructions stored on such non-transitory computer-readable media may, when executed by a processor or of a specific device, cause the specific device to perform processing operations in the machine according to the various example embodiments described above.

The non-transitory computer readable medium is not limited to a medium that permanently stores data therein, e.g., a register, a cache, a memory, or the like, but can be a medium that semi-permanently stores data therein and is readable by a device. In detail, the aforementioned various applications or programs may be stored in the non-transitory computer readable medium, for example, a compact disc (CD), a digital versatile disc (DVD), a hard disc, a Blu-ray disc, a USB, a memory card, a read only memory (ROM), and the like, and may be provided.

The respective components (e.g., module or program) according to the various embodiments of the invention may include a single entity or a plurality of entities, and some of the corresponding sub components described above may be omitted, or another sub component may be further added to the various embodiments. Alternatively or additionally, some components (e.g., module or program) may be combined to form a single entity which performs the same or similar functions as the corresponding elements before being combined. The module, program, or operations executed by other elements according to variety of embodiments may be executed consecutively, in parallel, repeatedly, or heuristically, or at least some operations may be executed according to a different order, may be omitted, or the other operation may be added thereto.

While the invention has been shown and described with reference to various embodiments thereof, it will be understood by those skilled in the art that various changes in form and details may be made therein without departing from the scope of the present invention as defined by the appended claims.

**Claims**

1. An electronic device (100), comprising:

    a communicator (110) comprising communication circuitry;
    a processor (130) electronically connected to the communicator (110) and configured to control the communicator (110); and
    a memory (120) electrically connected to the processor (130),
    wherein the memory (120) is configured to store instructions to control the processor (130) to transmit control information, which is acquired by applying target information of an air conditioning system (200) to a learning network model, to a plurality of air conditioning devices included in the air conditioning system (200) via the communicator (110),
    **characterized in that**
    the learning network model is configured to, based on identifying that an error is present in an estimation result of energy consumption through linear regression analysis based on learning data, generate virtual data and be retrained based on the generated virtual data, wherein
    the learning network model is further configured to generate the virtual data corresponding to a first condition based on learning data of a second condition where the error is not present in the estimation result of energy consumption, and
    wherein the first condition is a condition where the error is present in the estimation result of energy consumption,
    wherein the learning network is further configured to:

        cluster the estimation result of energy consumption into two groups according to a relationship between a processed heat quantity and an energy consumption of the electronic device, the two groups comprising a first group in which the processed heat quantity is in proportion to energy consumption, and a second group in which a processed heat quantity is not in proportion to energy consumption and the second group is a group in which the energy consumption remains unchanged or decreases even when the processed heat quantity is increased, and
generate the virtual data based on learning data included in the first group.

2. The electronic device (100) as claimed in claim 1, wherein the learning network model is further configured to:

    re-estimate energy consumption based on the learning data and the virtual data, and
    be retrained based on a result of re-estimation.

3. The electronic device (100) as claimed in claim 2, wherein the learning network model is further configured to:

    acquire a setting value of each of the plurality of air conditioning devices, and
    minimize a sum of energy consumption of each of the plurality of air conditioning devices from among the re-estimated energy consumption.

4. The electronic device (100) as claimed in claim 1, wherein the learning network model is further configured to learn a weight of a neural network included in the learning network model based on the learning data and the virtual data.

5. The electronic device (100) as claimed in claim 1,

    wherein the learning data includes previous driving data of each of the plurality of air conditioning devices, and
    wherein the previous driving data includes at least one of a setting value, energy consumption, outdoor air condition, air conditioning load, or indoor temperature and humidity data of each of the plurality of air conditioning devices.

6. The electronic device (100) as claimed in claim 1, wherein the learning network model is further configured to identify whether an error with respect to an estimation result of the energy consumption is present based on a predetermined condition including a law of physics.

7. The electronic device (100) as claimed in claim 1, wherein the learning network model is further configured to:

    identify at least one of an application time point or application duration of the acquired control information based on an air conditioning load and an outdoor air condition, and
    output the identified application time point or application duration of the acquired control information.

**8.** The electronic device (100) as claimed in claim 1, wherein the learning network model is further configured to:

transmit the control information to the plurality of air conditioning devices; and
based on at least one of an indoor temperature data or humidity data acquired via the communicator (110) not falling within a predetermined range, relearn the learning data and the virtual data based on the control information.

**9.** The electronic device (100) as claimed in claim 1, wherein the air conditioning system (200) comprises a heating, ventilating, and air conditioning (HVAC) device.

**10.** A control method, comprising:

applying target information of an air conditioning system (200) to a learning network model; and
transmitting control information acquired by applying target information of the air conditioning system (200) to the learning network model to a plurality of air conditioning devices included in the air conditioning system (200) so as to control operation of the air conditioning system (200), **characterized in that**
the learning network model is a learning network model configured to, based on identifying that an error is present in an estimation result of energy consumption through linear regression analysis based on a learning data, generate virtual data, and be retrained based on the virtual data, wherein
wherein the learning network model is further configured to:

generate the virtual data corresponding to a first condition based on learning data of a second condition where the error is not present in the estimation result of energy consumption wherein the first condition is a condition where the error is present in the estimation result of energy consumption, wherein the learning network model is further configured to:

cluster the estimation result of energy consumption into two groups according to a relationship between a processed heat quantity and an energy consumption of the electronic device, the two groups comprising a first group in which the processed heat quantity is in proportion to energy consumption, and a second group in which a processed heat quantity is not in proportion to energy consumption and the second group is a group in which the energy consumption remains unchanged or decreases even when the processed heat quantity is increased, and
generate the virtual data based on learning data included in the first group.

**11.** The control method as claimed in claim 10, wherein the learning network model is further configured to:

re-estimate energy consumption based on the learning data and the virtual data, and
be retrained based on a result of the re-estimation.

**12.** The control method as claimed in claim 11, wherein the learning network model is further configured to:

acquire a setting value of each of the plurality of air conditioning devices, and
minimize a sum of energy consumption of each of the plurality of air conditioning devices from among the re-estimated energy consumption.

**13.** The control method as claimed in claim 10, wherein the learning network model is further configured to learn a weight of a neural network included in the learning network model based on the learning data and the virtual data.

**14.** The control method as claimed in claim 10,

wherein the learning data includes previous driving data of each of the plurality of air conditioning devices, and
wherein the previous driving data includes at least one of a setting value, energy consumption, outdoor air condition, air conditioning load, or indoor temperature and humidity data of each of the plurality of air conditioning devices.

**Patentansprüche**

**1.** Elektronische Vorrichtung (100), umfassend:

einen Kommunikator (110), der Kommunikationsschaltung umfasst;
einen Prozessor (130), der elektronisch mit dem Kommunikator (110) verbunden und konfiguriert ist, um den Kommunikator (110) zu steuern; und
einen Speicher (120), der elektrisch mit dem Prozessor (130) verbunden ist,
wobei der Speicher (120) konfiguriert ist, um Anweisungen zu speichern, um den Prozessor (130) zu steuern, um Steuerungsinformationen, die durch Anwenden von Zielinformationen eines Klimatisierungssystems (200) auf ein Lernnetzwerkmodell erfasst werden, an eine Vielzahl von Klimatisierungsvorrichtungen, die in dem Klimatisierungssystem (200) enthalten ist, über den Kommunikator (110) zu übertragen,

**dadurch gekennzeichnet, dass**

das Lernnetzwerkmodell konfiguriert ist, um basierend auf dem Identifizieren, dass ein Fehler in einem Schätzergebnis von Energieverbrauch vorhanden ist, durch lineare Regressionsanalyse basierend auf Lerndaten, virtuelle Daten zu erzeugen und basierend auf den erzeugten virtuellen Daten umgeschult zu werden,

wobei

das Lernnetzwerkmodell ferner konfiguriert ist, um die virtuellen Daten entsprechend einer ersten Bedingung basierend auf Lerndaten einer zweiten Bedingung zu erzeugen, wobei der Fehler in dem Schätzergebnis von Energieverbrauch nicht vorhanden ist, und

wobei die erste Bedingung eine Bedingung ist, bei welcher der Fehler in dem Schätzergebnis von Energieverbrauch vorhanden ist,

wobei das Lernnetzwerk ferner zu Folgendem konfiguriert ist:

> Clustern des Schätzergebnisses von Energieverbrauch in zwei Gruppen gemäß einer Beziehung zwischen einer verarbeiteten Wärmemenge und einem Energiever-brauch der elektronischen Vorrichtung, wo-bei die zwei Gruppen eine erste Gruppe, in der die verarbeitete Wärmemenge proportional zu Energieverbrauch ist, und eine zweite Gruppe, in der eine verarbeitete Wärmemenge nicht proportional zu Energieverbrauch ist, umfassen, und die zweite Gruppe eine Gruppe ist, in welcher der Energieverbrauch unverändert bleibt oder abnimmt, selbst wenn die verarbeitete Wärmemenge erhöht wird, und
> Erzeugen der virtuellen Daten basierend auf Lerndaten, die in der ersten Gruppe enthalten sind.

2. Elektronische Vorrichtung (100) nach Anspruch 1, wobei das Lernnetzwerkmodell ferner zu Folgendem konfiguriert ist:

> erneutes Schätzen von Energieverbrauch basierend auf den Lerndaten und den virtuellen Daten, und
> Umschulen basierend auf einem Ergebnis der erneuten Schätzung.

3. Elektronische Vorrichtung (100) nach Anspruch 2, wobei das Lernnetzwerkmodell ferner zu Folgendem konfiguriert ist:

> Erfassen eines Einstellwertes von jeder aus der Vielzahl von Klimatisierungsvorrichtungen, und Minimieren einer Summe von Energieverbrauch von jeder aus der Vielzahl von Klimatisierungsvorrichtungen aus dem erneut geschätzten Energieverbrauch.

4. Elektronische Vorrichtung (100) nach Anspruch 1, wobei das Lernnetzwerkmodell ferner konfiguriert ist, um ein Gewicht eines neuronalen Netzwerks, das in dem Lernnetzwerkmodell enthalten ist, basierend auf den Lerndaten und den virtuellen Daten zu lernen.

5. Elektronische Vorrichtung (100) nach Anspruch 1, wobei die Lerndaten vorherige Antriebsdaten von jeder aus der Vielzahl von Klimatisierungsvorrichtungen beinhalten, und

wobei die vorherigen Antriebsdaten zumindest eines von einem Einstellwert, Energieverbrauch, Außen-luftbedingung, Klimatisierungslast oder Innentem-peratur- und Luftfeuchtigkeitsdaten von jeder aus der Vielzahl von Klimatisierungsvorrichtungen beinhalten.

6. Elektronische Vorrichtung (100) nach Anspruch 1, wobei das Lernnetzwerkmodell ferner konfiguriert ist, um zu identifizieren, ob ein Fehler in Bezug auf ein Schätzergebnis des Energieverbrauchs vorliegt, basierend auf einer vorbestimmten Bedingung, die ein physikalisches Gesetz beinhaltet.

7. Elektronische Vorrichtung (100) nach Anspruch 1, wobei das Lernnetzwerkmodell ferner zu Folgendem konfiguriert ist:

> Identifizieren von zumindest einem von einem Anwendungszeitpunkt oder einer Anwendungsdauer der erfassten Steuerungsinformationen basierend auf einer Klimatisierungslast und einer Außenluftbedingung, und
> Ausgeben des identifizierten Anwendungszeit-punktes oder der identifizierten Anwendungs-dauer der erfassten Steuerungsinformationen.

8. Elektronische Vorrichtung (100) nach Anspruch 1, wobei das Lernnetzwerkmodell ferner zu Folgendem konfiguriert ist:

> Übertragen der Steuerungsinformationen an die Vielzahl von Klimatisierungsvorrichtungen; und basierend auf zumindest einem von Innentemperaturdaten oder Luftfeuchtigkeitsdaten, die über den Kommunikator (110) erfasst werden, die nicht innerhalb eines vorbestimmten Bereichs fallen, erneutes Lernen der Lerndaten und der virtuellen Daten basierend auf den Steuerungsinformationen.

9. Elektronische Vorrichtung (100) nach Anspruch 1, wobei das Klimatisierungssystem (200) eine Heizungs-, Lüftungs- und Klimatisierungs(HVAC-)Vorrichtung umfasst.

10. Steuerungsverfahren, umfassend:

Anwenden von Zielinformationen eines Klimatisierungssystems (200) auf ein Lernnetzwerkmodell; und
Übertragen von Steuerungsinformationen, die durch Anwenden von Zielinformationen des Klimatisierungssystems (200) auf das Lernnetzwerkmodell erfasst werden, an eine Vielzahl von Klimatisierungsvorrichtungen, die in dem Klimatisierungssystem (200) enthalten sind, um Betrieb des Klimatisierungssystems (200) zu steuern,
**dadurch gekennzeichnet, dass**
das Lernnetzwerkmodell ein Lernnetzwerkmodell ist, das konfiguriert ist, um basierend auf dem Identifizieren, dass ein Fehler in einem Schätzergebnis von Energieverbrauch vorhanden ist, durch lineare Regressionsanalyse basierend auf Lerndaten, virtuelle Daten zu erzeugen und basierend auf den erzeugten virtuellen Daten umgeschult zu werden,
wobei das Lernnetzwerkmodell ferner zu Folgendem konfiguriert ist:

Erzeugen der virtuellen Daten entsprechend einer ersten Bedingung basierend auf Lerndaten einer zweiten Bedingung, wobei der Fehler in dem Schätzergebnis von Energieverbrauch nicht vorhanden ist, wobei die erste Bedingung eine Bedingung ist, wobei der Fehler in dem Schätzergebnis von Energieverbrauch vorhanden ist,
wobei das Lernnetzwerkmodell ferner zu Folgendem konfiguriert ist:

Clustern des Schätzergebnisses von Energieverbrauch in zwei Gruppen gemäß einer Beziehung zwischen einer verarbeiteten Wärmemenge und einem Energieverbrauch der elektronischen Vorrichtung, wobei die zwei Gruppen eine erste Gruppe, in der die verarbeitete Wärmemenge proportional zu Energieverbrauch ist, und eine zweite Gruppe, in der eine verarbeitete Wärmemenge nicht proportional zu Energieverbrauch ist, umfassen, und die zweite Gruppe eine Gruppe ist, in welcher der Energieverbrauch unverändert bleibt oder abnimmt, selbst wenn die verarbeitete Wärmemenge erhöht wird, und
Erzeugen der virtuellen Daten basierend auf Lerndaten, die in der ersten Gruppe enthalten sind.

11. Steuerungsverfahren nach Anspruch 10, wobei das Lernnetzwerkmodell ferner zu Folgendem konfiguriert ist:

erneutes Schätzen von Energieverbrauch basierend auf den Lerndaten und den virtuellen Daten, und
Umschulen basierend auf einem Ergebnis der erneuten Schätzung.

12. Steuerungsverfahren nach Anspruch 11, wobei das Lernnetzwerkmodell ferner zu Folgendem konfiguriert ist:

Erfassen eines Einstellwertes von jeder aus der Vielzahl von Klimatisierungsvorrichtungen, und
Minimieren einer Summe von Energieverbrauch von jeder aus der Vielzahl von Klimatisierungsvorrichtungen aus dem erneut geschätzten Energieverbrauch.

13. Steuerungsverfahren nach Anspruch 10, wobei das Lernnetzwerkmodell ferner konfiguriert ist, um ein Gewicht eines neuronalen Netzwerks, das in dem Lernnetzwerkmodell enthalten ist, basierend auf den Lerndaten und den virtuellen Daten zu lernen.

14. Steuerungsverfahren nach Anspruch 10,

wobei die Lerndaten vorherige Antriebsdaten von jeder aus der Vielzahl von Klimatisierungsvorrichtungen beinhalten, und
wobei die vorherigen Antriebsdaten zumindest eines von einem Einstellwert, Energieverbrauch, Außenluftbedingung, Klimatisierungslast oder Innentemperatur- und Luftfeuchtigkeitsdaten von jeder aus der Vielzahl von Klimatisierungsvorrichtungen beinhalten.

**Revendications**

1. Dispositif électronique (100), comprenant :

un communicateur (110) comprenant des circuits de communication ;
un processeur (130) connecté électroniquement au communicateur (110) et configuré pour commander le communicateur (110) ; et
une mémoire (120) connectée électriquement au processeur (130),

dans lequel la mémoire (120) est configurée pour stocker des instructions pour commander au processeur (130) de transmettre des informations de commande, qui sont acquises en appliquant des informations cibles d'un système de climatisation (200) à un modèle de réseau d'apprentissage, à une pluralité de dispositifs de climatisation compris dans le système de climatisation (200) par l'intermédiaire du communicateur (110),

**caractérisé en ce que**

le modèle de réseau d'apprentissage est configuré pour, sur la base de l'identification du fait qu'une erreur est présente dans un résultat d'estimation de consommation d'énergie par le biais d'une analyse de régression linéaire sur la base de données d'apprentissage, générer des données virtuelles et être réentraîné sur la base des données virtuelles générées,

dans lequel

le modèle de réseau d'apprentissage est en outre configuré pour générer les données virtuelles correspondant à une première condition sur la base de données d'apprentissage d'une seconde condition où l'erreur n'est pas présente dans le résultat d'estimation de consommation d'énergie, et

dans lequel la première condition est une condition où l'erreur est présente dans le résultat d'estimation de consommation d'énergie,

dans lequel le réseau d'apprentissage est en outre configuré pour :

regrouper le résultat de l'estimation de consommation d'énergie en deux groupes selon une relation entre une quantité de chaleur traitée et une consommation d'énergie du dispositif électronique, les deux groupes comprenant un premier groupe dans lequel la quantité de chaleur traitée est proportionnelle à la consommation d'énergie, et un second groupe dans lequel une quantité de chaleur traitée n'est pas proportionnelle à la consommation d'énergie et le second groupe est un groupe dans lequel la consommation d'énergie reste inchangée ou diminue même lorsque la quantité de chaleur traitée est augmentée, et générer les données virtuelles sur la base de données d'apprentissage comprises dans le premier groupe.

2. Dispositif électronique (100) selon la revendication 1, dans lequel le modèle de réseau d'apprentissage est en outre configuré pour :
réestimer la consommation d'énergie sur la base des données d'apprentissage et des données virtuelles, et être réentraîné sur la base d'un résultat de réestimation.

3. Dispositif électronique (100) selon la revendication 2, dans lequel le modèle de réseau d'apprentissage est en outre configuré pour :

acquérir une valeur de réglage de chacun de la pluralité de dispositifs de climatisation, et minimiser une somme de consommation d'énergie de chacun de la pluralité de dispositifs de climatisation parmi la consommation d'énergie réestimée.

4. Dispositif électronique (100) selon la revendication 1, dans lequel le modèle de réseau d'apprentissage est en outre configuré pour apprendre un poids d'un réseau neuronal compris dans le modèle de réseau d'apprentissage sur la base des données d'apprentissage et des données virtuelles.

5. Dispositif électronique (100) selon la revendication 1,

dans lequel les données d'apprentissage comprennent des données de conduite précédentes de chacun de la pluralité de dispositifs de climatisation, et

dans lequel les données de conduite précédentes comprennent au moins l'une d'une valeur de réglage, d'une consommation d'énergie, d'une condition d'air extérieur, d'une charge de climatisation ou de données de température et d'humidité intérieures de chacun de la pluralité de dispositifs de climatisation.

6. Dispositif électronique (100) selon la revendication 1, dans lequel le modèle de réseau d'apprentissage est en outre configuré pour identifier si une erreur par rapport à un résultat d'estimation de la consommation d'énergie est présente sur la base d'une condition prédéterminée comprenant une loi de physique.

7. Dispositif électronique (100) selon la revendication 1, dans lequel le modèle de réseau d'apprentissage est en outre configuré pour :

identifier au moins un élément parmi un point temporel d'application ou une durée d'application des informations de commande acquises sur la base d'une charge de climatisation et d'une condition d'air extérieur, et émettre en sortie le point temporel d'application ou la durée d'application identifiés des informations de commande acquises.

8. Dispositif électronique (100) selon la revendication 1, dans lequel le modèle de réseau d'apprentissage est en outre configuré pour :

transmettre les informations de commande à la pluralité de dispositifs de climatisation ; et
sur la base d'au moins l'une parmi les données de température intérieure ou des données d'humidité acquises par l'intermédiaire du communicateur (110) ne tombant pas dans une plage prédéterminée, réapprendre les données d'apprentissage et les données virtuelles sur la base des informations de commande.

9. Dispositif électronique (100) selon la revendication 1, dans lequel le système de climatisation (200) comprend un dispositif de chauffage, de ventilation et de climatisation (CVC).

10. Procédé de commande, comprenant :

l'application d'informations cibles d'un système de climatisation (200) à un modèle de réseau d'apprentissage ; et
la transmission d'informations de commande acquises en appliquant des informations cibles du système de climatisation (200) au modèle de réseau d'apprentissage à une pluralité de dispositifs de climatisation compris dans le système de climatisation (200) de façon à commander le fonctionnement du système de climatisation (200),
**caractérisé en ce que**
le modèle de réseau d'apprentissage est un modèle de réseau d'apprentissage configuré pour, sur la base de l'identification du fait qu'une erreur est présente dans un résultat d'estimation de consommation d'énergie par le biais d'une analyse de régression linéaire sur la base d'une donnée d'apprentissage, générer des données virtuelles et être réentraîné sur la base des données virtuelles,
dans lequel
dans lequel le modèle de réseau d'apprentissage est en outre configuré pour :

générer les données virtuelles correspondant à une première condition sur la base de données d'apprentissage d'une seconde condition où l'erreur n'est pas présente dans le résultat d'estimation de consommation d'énergie dans lequel la première condition est une condition où l'erreur est présente dans le résultat d'estimation de consommation d'énergie,
dans lequel le modèle de réseau d'apprentissage est en outre configuré pour :

regrouper le résultat de l'estimation de consommation d'énergie en deux groupes selon une relation entre une quantité de chaleur traitée et une consommation d'énergie du dispositif électronique, les deux groupes comprenant un premier groupe dans lequel la quantité de chaleur traitée est proportionnelle à la consommation d'énergie, et un second groupe dans lequel une quantité de chaleur traitée n'est pas proportionnelle à la consommation d'énergie et le second groupe est un groupe dans lequel la consommation d'énergie reste inchangée ou diminue même lorsque la quantité de chaleur traitée est augmentée, et
générer les données virtuelles sur la base de données d'apprentissage comprises dans le premier groupe.

11. Procédé de commande selon la revendication 10, dans lequel le modèle de réseau d'apprentissage est en outre configuré pour :
réestimer la consommation d'énergie sur la base des données d'apprentissage et des données virtuelles, et être réentraîné sur la base du résultat de réestimation.

12. Procédé de commande selon la revendication 11, dans lequel le modèle de réseau d'apprentissage est en outre configuré pour :

acquérir une valeur de réglage de chacun de la pluralité de dispositifs de climatisation, et
minimiser une somme de consommation d'énergie de chacun de la pluralité de dispositifs de climatisation parmi la consommation d'énergie réestimée.

13. Procédé de commande selon la revendication 10, dans lequel le modèle de réseau d'apprentissage est en outre configuré pour apprendre un poids d'un réseau neuronal compris dans le modèle de réseau d'apprentissage sur la base des données d'apprentissage et des données virtuelles.

14. Procédé de commande selon la revendication 10, dans lequel les données d'apprentissage comprennent des données de conduite précédentes de chacun de la pluralité de dispositifs de climatisation, et dans lequel les données de conduite précédentes comprennent au moins l'une d'une valeur de réglage, d'une consommation d'énergie, d'une condition d'air extérieur, d'une charge de climatisation ou de données de température et d'humidité intérieures de chacun de la pluralité de dispositifs de climatisation.

[Fig. 1]

<u>1000</u>

200

200

HEATING SECTION | VENTILATING SECTION
COOLING SECTION | AIR-CONDITIONING SECTION

~100

[Fig. 2]

<u>100</u>

110 · 130 · 120

| COMMUNICATOR | ←→ | PROCESSOR | ←→ | MEMORY |

[Fig. 3]

<u>100</u>

130

PROCESSOR

131 ~ RAM

~ 135

133 MAIN CPU

110 COMMUNICATOR

120 MEMORY

132 ~ ROM

134-1 FIRST INTERFACE

⋮ 134-n

NTH INTERFACE

140 USER INTERFACE

[Fig. 4]

START

LEARNING DATA — LEARN → LEARNING NETWORK MODEL

ESTIMATE ENERGY CONSUMPTION → IDENTIFY WHETHER ERROR OCCURS → ERROR DOES NOT OCCUR → END

RELEARN

ERROR OCCURS

<ERROR OCCURRENCE STATE> LEARNING DATA

<NORMAL STATE> VIRTUAL DATA

[Fig. 5a]

510

◇ ESTIMATION DATA
● LEARNING DATA

ENERGY CONSUMPTION

520

530

PROCESSED HEAT QUANTITY

[Fig. 5b]

□ FIRST ESTIMATION VALUE
△ SECOND ESTIMATION VALUE
◇ THIRD ESTIMATION VALUE

ENERGY CONSUMPTION

PROCESSED HEAT QUANTITY

[Fig. 6a]

BOUNDARY CONDITION

AIR CONDITIONING LOAD

[Fig. 6b]

[Fig. 7]

[Fig. 8a]

[Fig. 8b]

810

| LEARNING DATA ACQUISITION PART | ~810-1 |
| LEARNING DATA PREPROCESSING PART | ~810-2 |
| LEARNING DATA SELECTION PART | ~810-3 |
| MODEL LEARNING PART | ~810-4 |
| MODEL EVALUATION PART | ~810-5 |

820

| RECOGNITION DATA ACQUISITION PART | ~820-1 |
| RECOGNITION DATA PREPROCESSING PART | ~820-2 |
| RECOGNITION DATA SELECTION PART | ~820-3 |
| RECOGNITION RESULT PROVISION PART | ~820-4 |
| MODEL UPDATING PART | ~820-5 |

(a)                                          (b)

[Fig. 9]

START

↓

APPLY TARGET INFORMATION OF AIR CONDITIONING SYSTEM TO LEARNING NETWORK MODEL ~S910

↓

TRANSMIT CONTROL INFORMATION ACQUIRED BY APPLYING TARGET INFORMATION OF AIR CONDITIONING SYSTEM TO LEARNING NETWORK MODEL TO MULTIPLE AIR CONDITIONING DEVICES INCLUDED IN AIR CONDITIONING SYSTEM ~S920

↓

END

**EP 3 870 906 B1**

**Patent documents cited in the description**

- US 2018238572 A